Europäisches Patentamt

European Patent Office

Office européen des brevets

(19)

(11) Veröffentlichungsnummer: **0 341 417**

**A2**

(12) **EUROPÄISCHE PATENTANMELDUNG**

(21) Anmeldenummer: 89106011.3

(22) Anmeldetag: 06.04.89

(51) Int. Cl.⁴: **F26B 3/14 , F26B 17/12 , F26B 23/00**

(30) Priorität: 09.05.88 DE 3815763

(43) Veröffentlichungstag der Anmeldung:
15.11.89 Patentblatt 89/46

(84) Benannte Vertragsstaaten:
AT BE CH DE ES FR GB IT LI

(71) Anmelder: **Klöckner-Humboldt-Deutz Aktiengesellschaft**
**Deutz-Mülheimer-Strasse 111 Postfach 80 05 09**
**D-5000 Köln 80(DE)**

(72) Erfinder: **Klingbeil, Lothar**
**Attendornerstrasse 20**
**D-5000 Köln 91(DE)**

(54) Verfahren und Anlage zur Trocknung feuchter Materialien wie z.B. Zementrohstoffe mittels eines Gasstromes.

(57) Um feuchte Materialien, insbesondere feuchtes Zementrohmaterial zum Zwecke der Aufgabe in eine Zementklinkerproduktionslinie so zu trocknen, daß der maschinelle bzw. apparative und betriebskostenmäßige Aufwand für die Trocknung sehr gering ist, wird erfindungsgemäß vorgeschlagen, einen im Abgasstrom (10) einer Zementklinkerproduktionslinie ohnehin vorhandenen rohrförmigen Kühlturm bzw. Verdampfungskühler-Sprühturm als kombinierten Fallstromtrockner/Abgaskonditionierer (11) zu verwenden, in welchem das feuchte Zementrohmaterial (13) wirkungsvoll getrocknet wird, wobei in Zeiten, in denen keine oder nur eine geringe Menge feuchten Materials zu trocknen ist, der kombinierte Fallstromtrockner/Abgaskühler wieder als reiner Abgaskonditionierer zur Abkühlung und Befeuchtung des heißen Abgases einer Zementklinkerproduktionslinie betrieben wird. Dem Fallstromtrockner (11) ist materialseitig eine Mahleinrichtung vorgeschaltet, die mit Vorteil wenigstens eine Hochdruck-Walzenpresse (15) mit Gutbettzerkleinerung des feuchten Aufgabegutes aufweist.

FIG.1

## Verfahrn und Anlage zur Trocknung feuchter Materialien wie z. B. Zementrohstoffe mittels eines Gasstromes

Die Erfindung betrifft ein Verfahren zur Trocknung feuchter Materialien wie z. B. Zementrohstoffe mittels eines Gasstromes, insbesondere mittels des heißen Abgasstromes einer Zementklinkerproduktionslinie. Außerdem betrifft die Erfindung eine Anlage zur Durchführung des Verfahrens.

Für die Herstellung von Zementklinker wird aus Gründen der Energieersparnis überwiegend das sogenannte Trockenverfahren angewandt, bei dem das Zementrohmaterial in Mehlform und nahezu trocken in Drehrohröfen mit vorgeschalteten Zyklonvorwärmern zu Zementklinker gebrannt wird. Die Zementrohmaterialien enthalten aber im allgemeinen soviel Feuchtigkeit, daß vor Anwendung des Trockenverfahrens unbedingt eine Trocknung der feuchten Rohmaterialien vorgenommen werden muß. Diese Trocknung geschieht in der Regel in einer Mahltrocknungsanlage, die eine von Heißgas, insbesondere heißem Abgas der Zementklinkerproduktionslinie durchströmte Mühle wie z. B. Kugelmühle, Walzenschüsselmühle oder dgl. sowie ein vom Systemsaugzuggebläse der Zementklinkerproduktionslinie unabhängiges eigenes Mühlensaugzuggebläse aufweist. Solche an eine Zementklinkerproduktionslinie angeschlossenen Mahltrocknungsanlagen erfordern nicht unerhebliche Investitions- und Betriebskosten.

Der Erfindung liegt die Aufgabe zugrunde, feuchte Materialien, insbesondere feuchtes Zementrohmaterial vor dessen Aufgabe in eine Zementklinkerproduktionslinie so zu trocknen, daß der maschinelle bzw. apparative und betriebskostenmäßige Aufwand für die Trocknung sehr gering ist und die kombinierte Mahltrocknung mit eigenem Systemgebläse entfällt.

Diese Aufgabe wird gemäß der Erfindung mit einem Verfahren sowie mit einer Anlage gelöst, das bzw. die mit vorteilhaften Ausgestaltungen in den Ansprüchen 1 bis 9 gekennzeichnet sind.

Erfindungsgemäß wird erstmalig der Vorschlag gemacht, feuchte Zementrohstoffe wie feuchte Kalk- und Tonkomponenten oder dergleichen nicht in einem konventionellen Trockner oder in einer konventionellen Mahltrocknungseinrichtung zu trocknen, sondern nach ihrer im feuchten Materialzustand erfolgten Vermahlung direkt im Fallstrom in dem von oben nach unten strömenden, die Zementklinkerproduktionslinie verlassenden heißen Abgasstrom zu trocknen, der eine Temperatur von z. B. etwa 350° C aufweisen kann. Dabei wird nach einem besonderen Merkmal der Erfindung als Fallstromtrockner der im Abgasstrom der Zementklinkerproduktionslinie ohnehin vorhandene rohrförmige Kühlturm bzw. VerdampfungskühlerSprühturm verwendet, der in Zeiten, in denen keine oder nur eine kleine Menge feuchten Materials getrocknet werden muß, als Verdampfungskühler betrieben wird. Ein solcher Kühlturm mit Wassereindüsung bzw. Verdampfungskühlung ist im Abgasstrom einer Zementklinkerproduktionslinie deswegen notwendig, um das heiße Abgas zwecks Reinigung in Faserstoff-Staubfiltern sowie auch zwecks Befeuchtung mit Rücksicht auf den Betrieb elektrostatischer Staubabscheider zu konditionie ren. Die Erfindung liegt zum großem Teil in der zumindest teilweisen Zweckentfremdung des Kühlturms einer Zementklinkerproduktionslinie.

Die Vorteile der Erfindung sind im wesentliche folgende:

Erfindungsgemäß wird der bei einer Zementklinkerproduktionslinie ohnehin vorhandene rohrförmige Kühlturm als Fallstromtrockner für die feuchten Zementrohstoffe verwendet, ohne daß dadurch der Kühlturm seine Eigenschaft als Gasabkühler und Gasbefeuchter (Gaskonditionierer) verliert. Die Installation eines eigenen Trocknerapparates entfällt. Durch die dem Fallstromtrockner materialseitig vorgeschaltete Mahlung der feuchten Zementrohstoffe werden Mahlung und Trocknung getrennt durchgeführt, was einen geringeren Energieverbrauch zur Folge hat. Die verfahrenstechnische Dimensionierung der Systeme für Mahlung und Trocknung ist weitestgehend ohne gegenseitigen Einfluß im Vergleich zu kombinierten Mahltrocknungssystemen. Es ist nur ein einziges Saugzuggebläse bzw. nur ein einziger Systemventilator erforderlich, der nach dem Fallstromtrockner bzw. nach dem Staubabscheider zur Abscheidung des getrockneten Fertiggutes (Zementrohmehles) angeordnet ist, d. h. der einzige notwendige Systemventilator arbeitet verschleißarm im Reingasbereich und bei reduzierten Gasvolumina in einem niedrigen Tempera turbereich von z. B. etwa 90° C, wodurch die Betriebssicherheit der gesamten Zementklinkerproduktionslinie erheblich erhöht wird. Im erfindungsgemäßen Fallstromtrockner ist der Druckverlust des heißen Abgases im Vergleich zu konventionellen Trocknersystemen ganz gering, d. h. praktisch vernachlässigbar, da der pneumatische Materialtransport im Gleichstrom zum Gasstrom und in Richtung der Erdanziehung erfolgt. Beim erfindungsgemäßen Fallstromtrockner ist als festes statisches System eine gute Abdichtung gegen Falschlufteintritt gewährleistet.

Nach einem weiteren Merkmal der Erfindung wird das feuchte Material vor seiner Einführung in den Fallstromtrockner gemahlen, insbesondere durch Druckzerkleinerung im Spalt einer mit hoher Preßkraft betriebenen Hochdruck-Walzenpresse mit Gutbettzerkleinerung des feuchten Materials. Durch diese energiesparende Zerkleinerung im Walzenspalt der Hochdruck-Walzenpresse werden schülpenartige Agglomerate gebildet, die durch einen Desagglomerator aufgelöst werden, der mit Vorteil im Oberteil des Fallstromtrockners zur Desagglomerierung und gleichmäßigen Verteilung des zerkleinerten feuchten zu trocknenden Materials eingebaut sein kann.

Nach einem besonderen Merkmal der Erfindung kann mehr oder weniger unmittelbar an das untere Ende des Fallstromtrockners ein von oben angeströmter Sichter angeschlossen sein, dessen Feingutaustragsleitung über einen Staubabscheider, z. B. elektrostatischen Staubabscheider zum einzigen Systemventilator führt, und dessen Grobgutaustragsleitung zu der dem Fallstromtrockner materialseitig vorgeschalteten Mahleinrichtung führt.

Die separate Staubentsorgungseinrichtung des Kühlturms bei Mahl- und Trocknungsbetrieb entfällt im Vergleich zu gewöhnlichen Verdampfungskühlern, die im unteren Teil mit einem Staubaustragssytem ausgerüstet sind.

Die Erfindung und deren weitere Merkmale und Vorteile werden anhand der in den Figuren schematisch dargestellten Ausführungsbeispiele näher erläutert. Es zeigt:

Fig. 1 ein erstes Ausführungsbeispiel des erfindungsgemäßen kombinierten Fallstromtrockners/ Abgaskonditionierers mit angeschlossener Mahleinrichtung für feuchtes Zementrohmaterial;

Fig. 2 bis Fig. 4 andere Schaltungsvarianten des erfindungsgemäßen kombinierten Fallstromtrockners/ Abgaskonditionierers und

Fig. 5 ausschnittsweise vergrößert das Oberteil des erfindungsgemäßen Fallstromtrockners mit eingebautem Gutdesagglomerator und Gutverteiler.

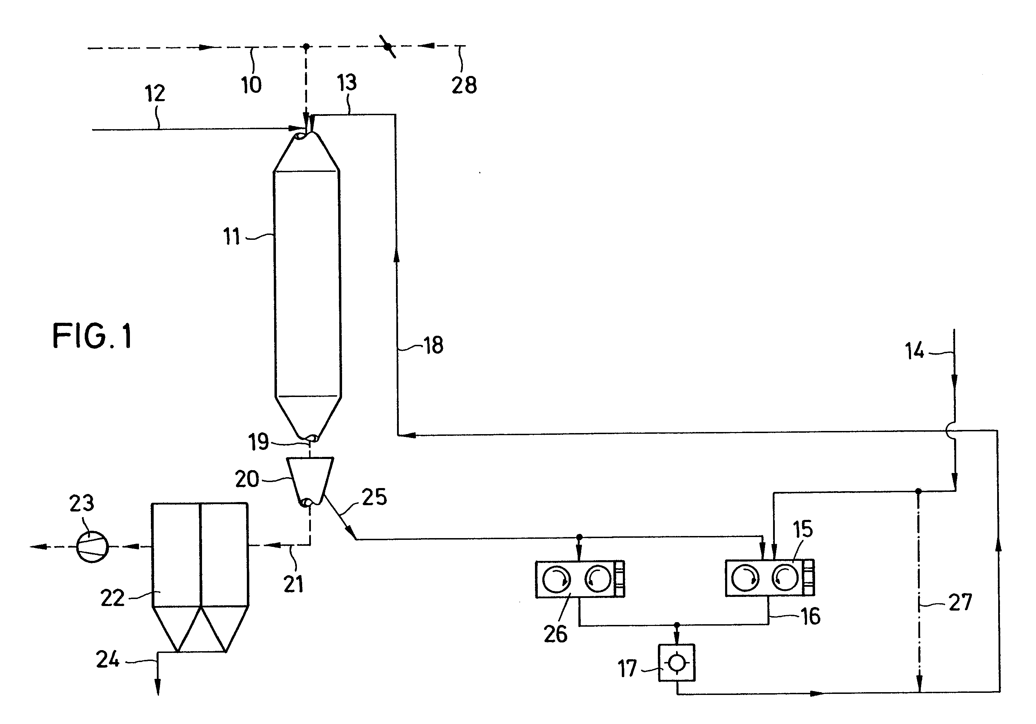

Nach Fig. 1 wird das heiße Abgas einer Zementklinkerproduktionslinie, das mit einer Temperatur von z. B. ca. 350° C unmittelbar von der obersten Zyklongruppe des Zyklonschwebegasvorwärmers zur Vorerhitzung des Zementrohmehls kommt, über eine Abgasleitung (10) von oben einem rohrförmigen Sprühturm (11) zugeführt und dort durch Einsprühen von Wasser, welches über Leitung (12) eingeführt wird, konditioniert, d. h. gekühlt und befeuchtet. Erfindungsgemäß wird nun der Sprühturm (11) auch als Fallstromtrockner bzw. als kombinierter Fallstromtrockner/Abgaskühler verwendet, in dessen oberes Ende die Zufuhrleitung (13) für feuchte zu trocknende Zementrohstoffe einmündet, welche z. B. eine Feuchtigkeit von 8 % aufweisen. Das feuchte Rohmaterial-Frischgut (14) wird vor Einführung in den Fallstromtrockner (11) in einer Mahleinrichtung gemahlen, im Ausführungsbeispiel nach Fig. 1 im Walzenspalt einer mit hoher Preßkraft größer 2 t/cm Walzenlänge betriebenen Hochdruck-Walzenpresse (15). Im Walzenspalt werden die einzelnen Partikel des feuchten Materials in einem Gutbett, d. h. in einer zwischen zwei Flächen zusammengedrückten Materialschüttung gegenseitig zerquetscht, so daß man hierbei von der sogenannten Gutbettzerkleinerung spricht. Der hohe Preßdruck führt zur Partikelzerstörung sowie zur Erzeugung von Anrissen im Partikelinneren, was sich sichtbar in der Bildung von Agglomeraten (sogenannten Schülpen) äußert, die mit vergleichsweise geringem Energieaufwand aufgelöst bzw. desagglomeriert werden können. Nach Fig. 1 werden die in der Walzenpresse (15) erzeugten Schülpen (16) im Desagglomerator (17) aufgelöst und über eine mechanische oder pneumatische Förderung (18) sowie Zufuhrleitung (13) in den Fallstromtrockner (11) eingeführt, in welchem das feuchte Material in dem von oben nach unten strömenden heißen Abgasstrom getrocknet wird. Der kombinierte Fallstromtrockner/Abgaskühler (11) kann eine Höhe von z. B. 40 m bis 50 m sowie einen Durchmesser von etwa 8 m aufweisen; die Gasgeschwindigkeit im Fallstromtrockner kann z. B. 3 m/sec. betragen, die Verweilzeit des zu trocknenden Materials im Fallstromtrockner kann z. B. etwa 10 sec. betragen.

An das untere Ende des Fallstromtrockners (11) ist die Leitung (19) zum Abzug des abgekühlten Abgasstromes sowie des getrockneten Materials angeschlossen. Die Leitung (19) führt zu einem von oben angeströmten statischen oder dynamischen Sichter (20), dessen Feingutaustragsleitung (21) über einen Staubabscheider (22), z. B. elektrostatischen Staubabscheider zum einzig vorhandenen und auch nur einzig notwendigen Systemventilator (23) bzw. Saugzuggebläse führt, der verschleißarm im Reingasbereich und in einem niedrigen Temperaturbereich von z. B. etwa 90° C arbeitet, wodurch die Betriebssicherheit der gesamten Zementklinkerproduktions linie deutlich erhöht ist. Der Staubabscheider (22) scheidet aus dem abgekühlten und befeuchteten Gasstrom (21) das getrocknete Fertiggut (24) mit einer Feuchtigkeit kleiner 1 % ab, d. h. Zementrohmehl, welches der Homogenisierung zugeleitet wird, bevor es in den Zyklonschwebegas-Vorwärmer der Zementklinkerproduktionslinie aufgegeben wird. Die Grobgutaustragsleitung (25) des Sichters (20) rezirkuliert die Sichtergriese zurück zur Mahleinrichtung, im Ausführungsbeispiel nach Fig. 1 zur Hochdruck-Walzenpresse (15) und/oder zu einer weiteren Hochdruck-Walzenpresse (26), die zur Walzenpresse (15) parallelgeschaltet ist. Hat das feuchte RohmaterialFrischgut (14) schon von Haus aus eine ausreichend hohe Feinheit, so kann es über die strichpunktiert gezeichnete Leitung (27) die Mahleinrichtung umgehen. An die vom Zementrohmehlvorwärmer kommende Abgasleitung (10) kann eine weitere Heißgaszuführungsleitung (28) angeschlossen sein, die heiße Kühlerabluft des Zementklinkerkühlers der Zementklinkerproduktionslinie oder auch Heißgas eines eigenen Heißgaserzeugers zuführt.

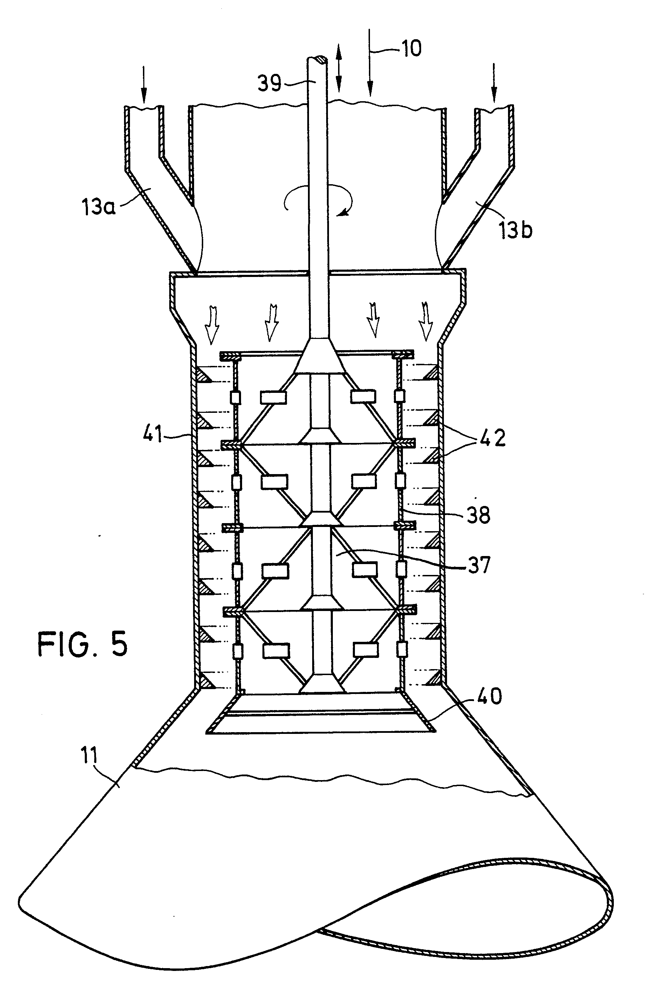

Es besteht auch die Möglichkeit, daß die gesamte Materialmischung des Frischgutes (14) oder eine Teilkomponente über Leitung (27) erforderlichenfalls zur Vorzerkleinerung und/oder Vortrocknung, sei es zur Partikelgrößenreduzierung und/oder zur besseren Handhabung, einem z. B. im oberen Teil des Fallstromtrockners (11) ein gebauten Desagglomerator zuerst zugeführt wird (vergleiche auch Fig. 5), um ein noch geeigneteres Produkt für das nachgeschaltete Mahlsystem zu erzeugen.

In Zeiten, in denen keine oder nur eine kleine Menge feuchter Zementrohstoffe zu trocknen ist, wird der Fallstromtrockner (11) unter Benutzung der Sprühwasserleitung (12) wieder als Verdampfungskühler betrieben.

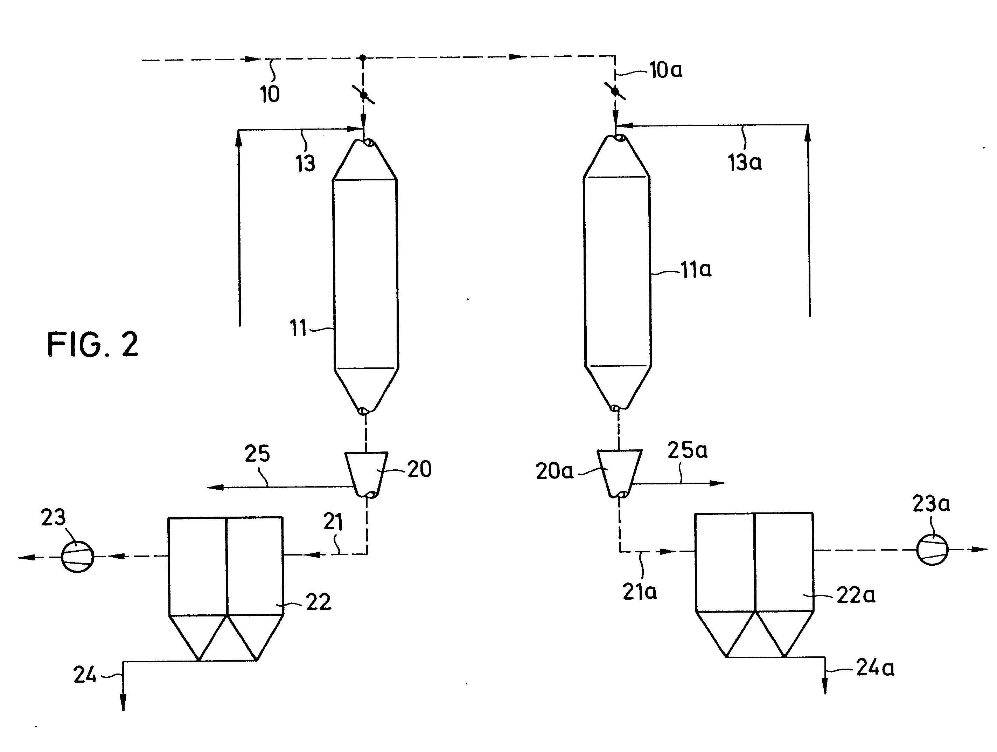

Nach Fig. 2 können auch zwei von Heißgas (10) durchströmte Fallstromtrockner (11) und (11a) parallelgeschaltet sein, von denen der eine (11) mit der Zufuhrleitung (13) feuchten Zementrohmaterials und der andere (11a) mit der Zufuhrleitung (13a) eines anderen feuchten Materiales wie z. B. feuchter Kohle mit z. B. 5 bis 15 % Feuchtigkeit in Verbindung steht. Die Teile (20a) bis (25a) des rechten Materialstranges der Fig. 2 entsprechen den analogen Teilen des linken Stranges bzw. den Teilen des Ausführungsbeispieles der Fig. 1. Das heißt, daß nach Fig. 2 im linken Materialstrang getrocknetes Fertiggut (24) (fertiges trockenes Zementrohmehl zur Homogenisierung) und im rechten Materialstrang getrocknetes Fertiggut (24a) (fertiger trockener Kohlenstaub) gleichzeitig gewonnen werden. Der im rechten Fallstromtrockner (11a) für die feuchte Kohle benutzte Heißgasstrom (10a) ist ein Teilstrom des Abgases (10) der Zementklinkerproduktionslinie und hat daher eine hoher Inertgasqualität.

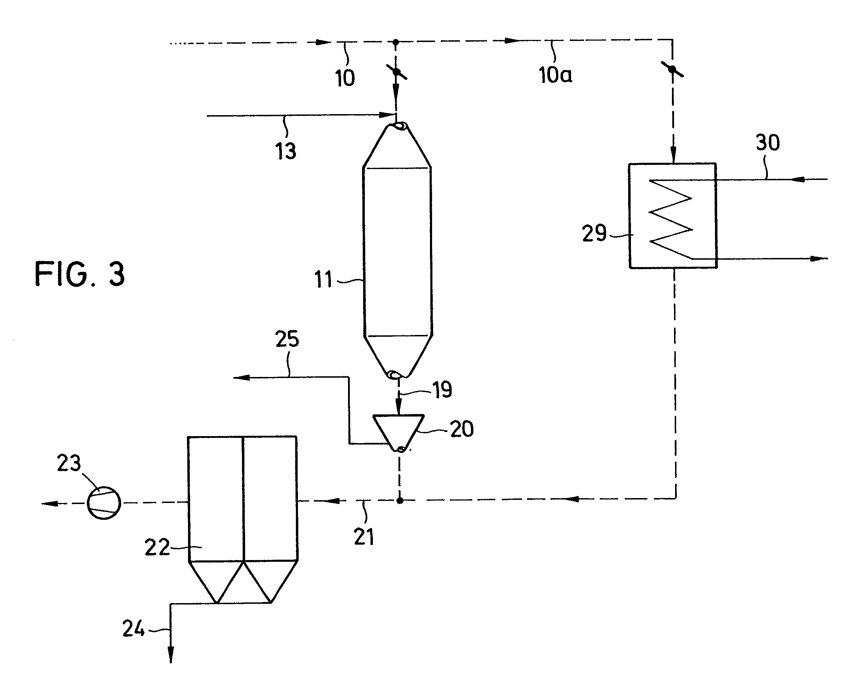

Beim Ausführungsbeispiel der Fig. 3 wird der nicht für den Fallstromtrockner (11) benötigte Teilstrom des heißen Abgasstromes (10) der Zementklinkerproduktionslinie über eine Abgaszweigleitung (10a) über einen Wärmetauscher (29) geführt, der dem Fallstromtrockner (11) parallelgeschaltet ist. Der Wärmetauscher (29) kann z. B. Thermoöl (30) als Wärmeträger erhitzen. Der Druckverlust des rechten Teiles der Schaltung mit dem Wärmetauscher (29) sollte annähernd gleich sein dem Druckverlust des linken Schaltungsteiles mit dem Fallstromtrockner (11).

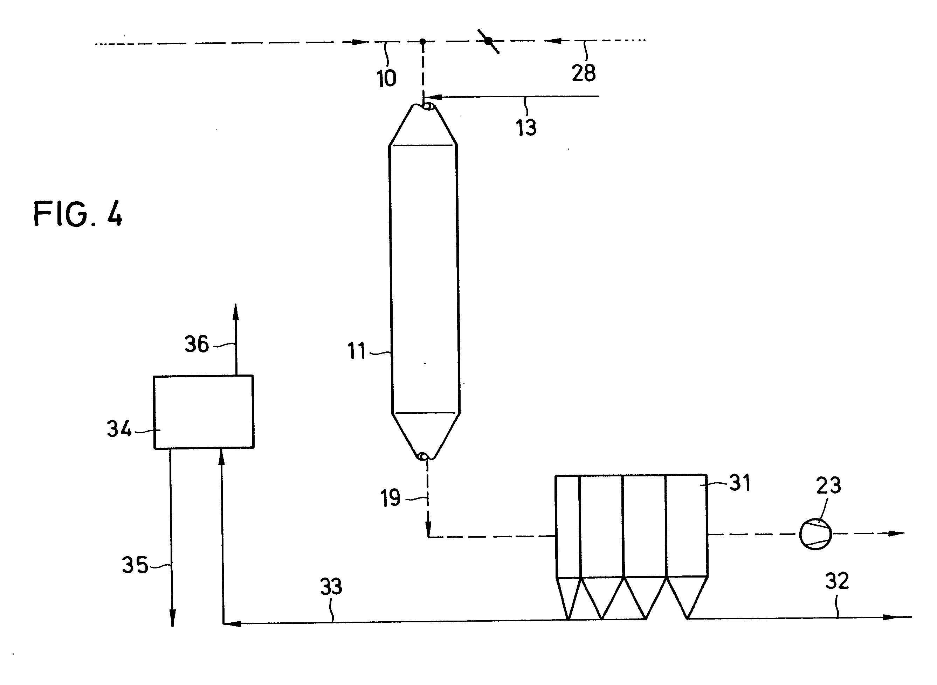

Beim Ausführungsbeispiel der Fig. 4 wird das gesamte, den Stromtrockner (11) unten verlassende Material vom Gasstrom in einem Abscheider, z. B. elektrostatischen Staubabscheider (31) abgeschieden, der z. B. in vier hintereinanderliegende Trennzonen unterteilt ist. Während aus der in Strömungsrichtung gesehen hintersten Trennzone des Abscheiders (31) getrocknetes Fertiggut (32) abgezogen wird, wird das in den anderen drei Zonen des Abscheiders (31) abgeschiedene Feststoffmaterial über Leitung (33) einem außerhalb des Systems liegenden Sichter (34) zugeleitet, der das Material in Fertiggut (35) und Griese (36) trennt, die zu der in Fig. 4 nicht dargestellten, jedoch in Fig. 1 dargestellten Mahleinrichtung rezirkuliert werden.

Bei allen Ausführungsbeispielen wird das zu trocknende feuchte Material dem Fallstromtrockner (11) in der Weise aufgegeben, daß das Material über den Querschnitt des Fallstromtrockners in desagglomerierter Form gleichmäßig verteilt wird. Daher kann mit Vorteil im Oberteil des Fallstromtrockners (11) ein Desagglomerator (37) zur Desagglomerierung, gleichmäßigen Verteilung und ggf. noch Zerkleinerung des feuchten zu trocknenden Materiales eingebaut sein, wie er beispielsweise in Fig. 5 vergrößert dargestellt ist. Nach diesem Ausführungsbeispiel weist der Desagglomerator (37) einen mit am Umfang verteilten vertikalen Rotorleisten (38) versehenen Rotor mit einer Rotorwelle (39) auf, die mit einem drehzahlregelbaren Antrieb zur optimalen Desagglomerierung und Streuung des feuchten Materiales in Verbindung steht und außerdem in vertikaler Richtung zur optimalen Anordnung im Trockner positionierbar ist. Wird der Fallstromtrockner (11) ausschließlich als Kühlturm betrieben, so kann der Desagglomerator (37) mit seiner Rotorwelle (39) nach oben in eine Warteposition zurückgezogen werden. Das untere Ende des Rotors kann einen sich nach unten kegelstumpfmantelförmig erweiternden Streukegel (40) aufweisen. An der Innenwandung des den Desagglomator (37) aufnehmenden Rohrstutzens (41) des Fallstromtrockners (11) können mehrere ringförmige Prallund Leitelemente (42) angeordnet sein. Während das Heißgas (10) zentral von oben zugeführt wird, wird das zu trocknende feuchte Material über ein oder mehrere am Umfang des Desagglomerators verteilte Materialzuführungsleitungen (13a, 13b) zentral und peripher dem Desagglomerator zugeführt. Auf diese Weise ist eine gleichmäßige homogene Verteilung des feuchten Aufgabegutes über den Trocknerquerschnitt sowie abgesehen von der Gutdesagglomerierung ggf. auch noch eine Gutzerkleinerung möglich.

**Ansprüche**

1. Verfahren zur Trocknung feuchter Materialien wie z. B. Zementrohstoffe mittels eines Gasstromes, insbesondere mittels des heißen Abgasstromes einer Zementklinkerproduktionslinie, dadurch gekennzeichnet, daß das feuchte Material ggf. nach seiner Mahlung im Fallstrom (11) in dem von oben nach unten strömenden heißen Gasstrom getrocknet wird und daß das getrocknete Fertiggut in einem Staubabscheider (22) aus dem abgekühlten und befeuchteten Gasstrom (21) abgeschieden wird.

2. Verfahren nach Anspruch 1, dadurch gekennzeichnet, daß das feuchte Material vor Einführung in den Fallstromtrockner (11) gemahlen wird, insbesondere durch Druckzerkleinerung im Walzenspalt einer Hochdruck-Walzenpresse (15).

3. Verfahren nach Anspruch 1, dadurch gekennzeichnet, daß als Fallstromtrockner (11) der im Abgasstrom (10) einer Zementklinkerproduktionslinie ohnehin vorhandene rohrförmige Kühlturm bzw. Verdampfungskühler-Sprühturm verwendet wird, der in Zeiten, in denen keine oder nur eine kleine Menge feuchten Materials getrocknet wird, als Verdampfungskühler betrieben wird.

4. Anlage zur Trocknung feuchter Materialien wie z. B. Zementrohstoffe mittels eines Gasstromes, insbesondere mittels des heißen Abgasstromes einer Zementklinkerproduktionslinie, zur Durchführung des Verfahrens nach einem oder mehreren der Ansprüche 1 bis 3, gekennzeichnet durch einen in die Abgasleitung (10) der Zementklinkerproduktionslinie eingeschalteten, im wesentlichen als senkrechtes Rohr ausgebildeten kombinierten Fallstromtrockner/Abgaskonditionierer (11), in dessen oberes Ende die Abgasleitung (10), die Zufuhrleitung des feuchten Materials (13) und die Leitung (12) zum Einsprühen von Kühlwasser münden und an dessen unteres Ende die Leitung (19) zum Abzug des abgekühlten Abgasstroms sowie getrockneten Materials angeschlossen ist.

5. Anlage nach Anspruch 4, dadurch gekennzeichnet, daß an das untere Ende des Fallstromtrockners (11) ein Sichter (10) angeschlossen ist, dessen Feingutaustragsleitung (21) über einen Staubabscheider (22), z. B. elektrostatischen Staubabscheider zu einem Saugzuggebläse (23) führt, und dessen Grobgutaustragsleitung (25) zu einer dem Fallstromtrockner materialseitig vorgeschalteten Mahleinrichtung (15, 16) führt.

6. Anlage nach Anspruch 4 oder 5, dadurch gekennzeichnet, daß die dem Fallstromtrockner (11) materialseitig vorgeschaltete Mahleinrichtung wenigstens eine mit hoher Preßkraft betriebene Hochdruck-Walzenpresse (15, 16) mit Gutbettzerkleinerung des feuchten Materials aufweist.

7. Anlage nach Anspruch 4, dadurch gekennzeichnet, daß zwei von Heißgas (10) durchströmte Fallstromtrockner (11) und (11a) parallelgeschaltet sind, von denen der eine (11) mit der Zufuhrleitung (13) feuchten Zementrohmaterials und der andere (11a) mit der Zufuhrleitung (13a) eines anderen feuchten Materiales wie z. B. feuchter Kohle in Verbindung steht.

8. Anlage nach Anspruch 4, dadurch gekennzeichnet, daß der nicht für den Fallstromtrockner (11) benötigte Teilstrom des heißen Abgasstromes (10) der Zementklinkerproduktionslinie über einen Wärmetauscher (29) geführt ist, der dem Fallstromtrockner (11) parallelgeschaltet ist.

9. Anlage nach Anspruch 4, dadurch gekennzeichnet, daß im Oberteil des Fallstromtrockners (11) ein Desagglomerator (37) zur Desagglomerierung und gleichmäßigen Verteilung des feuchten zu trocknenden Materiales (13a, 13b) eingebaut ist.

FIG.1

EP 0 341 417 A2

FIG. 2

FIG. 3

EP 0 341 417 A2

FIG. 4

FIG. 5